# EUROPEAN PATENT APPLICATION

(11) **EP 4 765 496 A1**
(43) Date of publication of application: **24.06.2026**
(21) Application number: 25222918.2
(22) Date of filing: 12.12.2025
(51) Int. Cl.: H01R 4/02, H01R 4/62, H01R 13/03, H01R 25/16, H01R 11/09, H01R 43/02

(54) **BUSBAR AND BUSBAR ASSEMBLY**

(30) Priority: 16.12.2024 CN 202423104608 U
(71) Applicant: SCHNEIDER ELECTRIC INDUSTRIES SAS, 92500 Rueil-Malmaison (FR)
(72) Inventor: SONG, Xianfeng, Guangdong, 510530 (CN)
(74) Representative: Openshaw & Co.

(57) **Abstract**

Disclosed is a busbar (100) and a busbar assembly. The busbar (100) includes a body (1) and at least one first conductive connecting member (2). The body (1) includes a pair of end parts (11) disposed opposite to each other along a length direction thereof, and each end part (11) of the pair of end parts (11) includes a pair of first surfaces (112) disposed opposite to each other along a thickness direction of the body (1). The at least one first conductive connecting member (2) is disposed on at least one first surface (112) of the pair of first surfaces (112) of a corresponding end part (11) of the body (1).

## Description

### FIELD

Embodiments of the present disclosure generally relate to the technical field of electrical equipment, and more particularly, to a busbar and a busbar assembly.

### BACKGROUND

Aluminum sometimes serves as conductor material for some conventional busbars to reduce material costs. However, an aluminum conductor tends to form an oxide layer with poor electrical conductivity at its surface during use, so that a relatively high contact resistance occurs at the electrical connection. This not only causes more electrical energy to be lost due to conversion into thermal energy, but also causes a local temperature increase, posing a potential risk to safe and stable operation of the entire circuit system.

### SUMMARY

An object of the present disclosure is to provide a busbar and a busbar assembly to at least partially solve the above problems.

In a first aspect of the present disclosure, a busbar is provided. The busbar includes a body and at least one first conductive connecting member. The body includes a pair of end parts disposed opposite to each other along a length direction thereof, and each end part of the pair of end parts includes a pair of first surfaces disposed opposite to each other along a thickness direction of the body. The at least one first conductive connecting member is disposed on at least one first surface of the pair of first surfaces of a corresponding end part of the body.

According to embodiments of the present disclosure, the first conductive connecting member is disposed on at least one first surface of the pair of first surfaces of the corresponding end part of the body. With the above arrangement, the anti-oxidation performance of a portion of the body that contacts the first conductive connecting member is improved, and the influence of oxidation generated during use on the electrical connection performance of the busbar can be reduced. During use, the current flows from the body to the electrical connector via the first conductive connecting member. Since the electrical connector is not in direct contact with the body, the contact resistance at the electrical connection is reduced, helping to reduce the electrical energy loss and lower the temperature of the system, thereby improving the stability of the electrical system.

In some embodiments, each end part of the pair of end parts further includes an end face disposed at an end of the body along the length direction, the end face is located between the pair of first surfaces, and the first conductive connecting member is disposed on the end face and the pair of first surfaces of the corresponding end part around the corresponding end part.

In some embodiments, the first conductive connecting member includes a first part and a pair of second parts disposed on the same side of the first part, the first part is disposed on the end face of the corresponding end part, and each second part of the pair of second parts is disposed on a corresponding first surface.

In some embodiments, the first conductive connecting member is welded to the corresponding end part of the body, and the first conductive connecting member is connected to the corresponding end part through a plurality of first solder joints or a strip-like solder seam.

In some embodiments, the first conductive connecting member is divided into a plurality of connecting units along a width direction of the body, and adjacent connecting units of the plurality of connecting units are spaced apart from each other.

In some embodiments, the busbar further includes at least one second conductive connecting member, the body further includes a middle part located between the pair of end parts, and the at least one second conductive connecting member is disposed on a side or two sides of the middle part along the length direction of the body.

In some embodiments, the middle part includes a pair of second surfaces disposed opposite to each other along the thickness direction of the body and a pair of first side surfaces disposed opposite to each other along a width direction of the body, the second conductive connecting member includes a third part and a pair of fourth parts connected to the third part, the third part of the second conductive connecting member is disposed on a corresponding first side surface of the middle part, and the pair of fourth parts of the second conductive connecting member are disposed on the pair of second surfaces of the middle part.

In some embodiments, each end part of the pair of end parts further includes a pair of second side surfaces disposed opposite to each other along a width direction of the body, the first conductive connecting member further includes a pair of fifth parts disposed opposite to each other along the width direction of the body and a pair of sixth parts disposed opposite to each other along the width direction of the body, the pair of fifth parts are connected to one of the pair of second parts of a corresponding first conductive connecting member and disposed on the pair of second side surfaces of the corresponding end part, and the pair of sixth parts are connected to the other one of the pair of second parts of the corresponding first conductive connecting member and disposed on the pair of second side surfaces of the corresponding end part.

In some embodiments, the pair of fifth parts are spaced apart from the pair of sixth parts of the corresponding first conductive connecting member along the thickness direction of the body to jointly wrap around the pair of second side surfaces of the corresponding end part.

In a second aspect of the present disclosure, a busbar assembly is provided. The busbar assembly includes a housing and a plurality of busbars, each busbar is any busbar of the first aspect of the present disclosure. The plurality of busbars are spaced apart along a thickness direction of the body, and the pair of end parts of each busbar at least partially extend out of the housing.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 shows a schematic structural diagram of a busbar according to some embodiments of the present disclosure;
FIG. 2 shows a schematic structural diagram of a body according to some embodiments of the present disclosure;
FIG. 3 shows a schematic structural diagram of a first conductive connecting member according to some embodiments of the present disclosure;
FIG. 4 shows a schematic structural diagram of a second conductive connecting member according to some embodiments of the present disclosure;
FIG. 5 shows a schematic structural diagram of a portion of a body and a first conductive connecting member according to some other embodiments of the present disclosure;
FIG. 6 shows an exploded view of the first conductive connecting member shown in FIG. 5;
FIG. 7 shows a schematic structural diagram of a first conductive connecting member according to some other embodiments of the present disclosure;
FIGS. 8 and 9 show schematic structural diagrams of a portion of a second conductive connecting member and a body according to some other embodiments of the present disclosure;
FIG. 10 shows a schematic structural diagram of a busbar assembly according to some embodiments of the present disclosure; and
FIG. 11 shows an enlarged view of a portion A of the busbar assembly shown in FIG. 10.

### Description of reference numerals:

100 busbar, 101 connecting unit; 200 housing;
1 body, 11 end part, 111 end face, 112 first surface, 113 second side surface, 12 middle part, 121 second surface, 122 first side surface, 13 extending part, 131 third surface, 132 third side surface;
2 first conductive connecting member, 21 first part, 22 second part, 23 first solder joint, 24 fifth part, 25 sixth part;
3 second conductive connecting member, 31 third part, 32 fourth part, 33 second solder joint;
X thickness direction of body; Y width direction of body; Z length direction of body.

### DETAILED DESCRIPTION

Embodiments of the present disclosure will be described in more detail below with reference to the accompanying drawings. While embodiments of the present disclosure are shown in the drawings, it should be understood that the present disclosure may be implemented in various forms and should not be limited by embodiments set forth herein. Rather, these embodiments are provided to make this disclosure more thorough and complete, and to fully convey the scope of the present disclosure to those skilled in the art.

As used herein, the term "including" and variations thereof represent openness, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first", "second", and the like may refer to different or identical objects.

As described above, aluminum sometimes serves as conductor material for some conventional busbars to reduce material costs. However, an aluminum conductor tends to form an oxide layer with poor electrical conductivity at its surface during use, so that a relatively high contact resistance occurs at the electrical connection. This not only causes more electrical energy to be lost due to conversion into thermal energy, but also causes a local temperature increase, posing a potential risk to safe and stable operation of the entire circuit system.

The inventor notes that, in order to solve the above problems, in conventional busbars, the surfaces of the aluminum plates are tin-plated. However, the cost of electroplating is high, and the tin-plated layers exhibit limited current-carrying capacity due to temperature rise limitation. In addition, in conventional busbars, copper-aluminum composite sheets are welded onto the surfaces of aluminum plates, thereby forming copper contact layers on the surfaces of electrical connection. However, this technology requires the application of special composite processes and special welding processes, and the product cost is high.

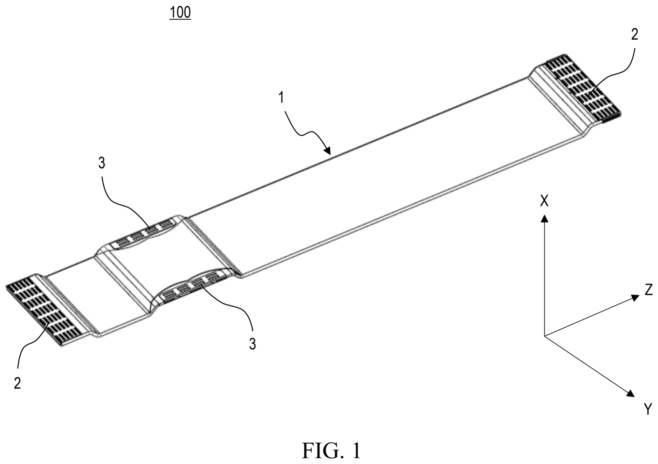

Based on this, embodiments of the present disclosure provide a busbar 100 and a busbar assembly to at least partially solve the above problems. Hereinafter, the principles of the present disclosure will be described with reference to FIGS. 1 to 11.

FIG. 1 shows a schematic structural diagram of a busbar 100 according to some embodiments of the present disclosure. As shown in FIG. 1, the busbar 100 described herein generally includes a body 1, at least one first conductive connecting member 2, and at least one second conductive connecting member 3.

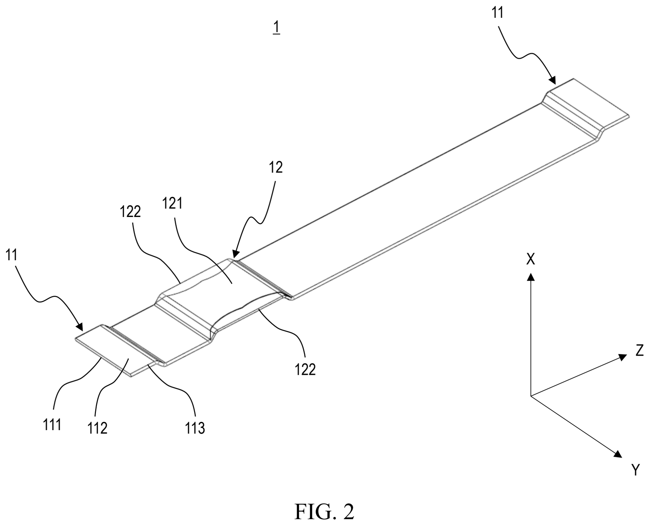

FIG. 2 shows a schematic structural diagram of the body 1 according to some embodiments of the present disclosure. As shown in FIGS. 1 and 2, the body 1 according to embodiments of the present disclosure includes a pair of end parts 11, and the pair of end parts 11 may be disposed opposite to each other along a length direction Z of the body 1. Each end part 11 of the pair of end parts 11 includes an end face 111 and a pair of first surfaces 112. The pair of first surfaces 112 are disposed opposite to each other along a thickness direction X of the body 1. The end face 111 is disposed at an end of the body 1 along the length direction Z of the body 1. The end face 111 is located between the pair of first surfaces 112, and the end face 111 is connected to the pair of first surfaces 112. Correspondingly, each first conductive connecting member 2 is disposed on at least one first surface 112 of the pair of first surfaces 112 of a corresponding end part 11 of the body 1.

With the above configuration, the anti-oxidation performance of a portion of the body 1 that contacts the first conductive connecting member 2 is improved, and the influence of oxidation generated during use on the electrical connection performance of the busbar 100 can be reduced. During use, the current flows from the body 1 to the electrical connector or other electrical component via the first conductive connecting member 2. Since the electrical connector is not in direct contact with the body 1, the contact resistance at the electrical connection is reduced, helping to reduce the electrical energy loss and lower the temperature of the system, thereby improving the stability of the electrical system.

In some embodiments, the body 1 may include an aluminum plate. The first conductive connecting members 2 may be made of copper. Aluminum plates are widely used due to their good electrical conductivity and thermal conductivity as well as relatively low cost, but their surfaces readily form oxide layers having high resistance. A copper first conductive connecting member 2 is disposed on the surface of the aluminum plate, so that the aluminum oxide layer can be eliminated, and the problem of relatively high resistance is solved. In addition, copper has lower resistivity and relatively better anti-oxidation performance, and can maintain stable electrical contact for a long time. When the copper first conductive connecting member 2 is combined with the aluminum plate, even if an oxide layer is formed on the surface of the aluminum plate, the current can still be transmitted to the interior of the aluminum plate through the copper part, thereby reducing the electrical energy loss caused by the aluminum oxide layer.

In the busbar 100 according to embodiments of the present disclosure, the copper-aluminum composite plate or the tin-plated layer connected to the aluminum plate is replaced with a non-composite copper plate, no special process needs to be applied, and the material cost is reduced. In addition, copper plate is less affected by temperature rise limitation, thus effectively improving the current-carrying capacity of the contact region.

The first conductive connecting member 2 according to embodiments of the present disclosure may be made of various types of materials currently known or available in the future, as long as the first conductive connecting member 2 has good anti-oxidation performance, which is not limited in embodiments of the present disclosure. In addition, in examples shown in FIGS. 1 and 2, the at least one first conductive connecting member 2 may include a pair of first conductive connecting members 2, one of the pair of first conductive connecting members 2 is disposed on an end part 11, and the other one of the pair of first conductive connecting member 2 is disposed on the other end part 11. Certainly, in other examples, the at least one first conductive connecting member 2 may include one first conductive connecting member 2, and the first conductive connecting member 2 is disposed on one end part 11. Embodiments of the present disclosure are not limited thereto.

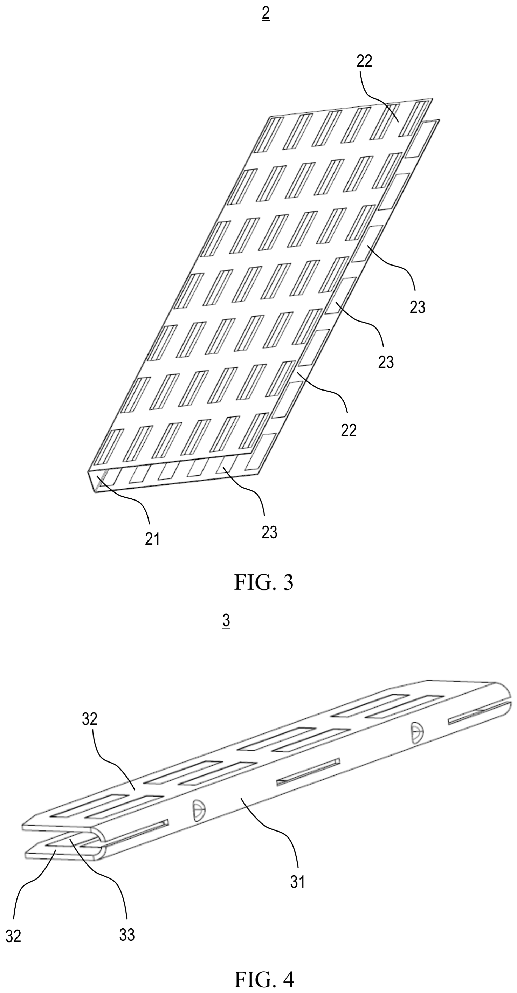

FIG. 3 shows a schematic structural diagram of the first conductive connecting member 2 according to some embodiments of the present disclosure. As shown in FIGS. 1 to 3, in some embodiments, each first conductive connecting member 2 may be U-shaped, and each first conductive connecting member 2 may be disposed on the end face 111 and the pair of first surfaces 112 of the corresponding end part 11 around the corresponding end part 11. For example, each first conductive connecting member 2 may include a first part 21 and a pair of second parts 22 disposed on a same side of the first part 21. Thus, the first part 21 may be disposed on the end face 111 of the corresponding end part 11, and each second part 22 of the pair of second parts 22 may be disposed on the corresponding first surface 112. With the above configuration, during the process of manufacturing the busbar 100, an oxide layer on the surface of the body 1 can be removed, and then the first conductive connecting member 2 is connected to the body 1. During subsequent use, the body 1 and the first conductive connecting member 2 can maintain a good contact state, and no loosening will occur at their contact position, thereby reducing the occurrence of oxide layer and helping to maintain good electrical conductivity.

In some other embodiments, each first conductive connecting members 2 may be disposed only on the pair of first surfaces 112 of the corresponding end part 11. For example, each first conductive connecting member 2 may include the pair of second parts 22. Thus, each second part 22 of the pair of second parts 22 may be disposed on the corresponding first surface 112. In other embodiments, each first conductive connecting member 2 may be disposed only on any first surface 112 of the pair of first surfaces 112 of the corresponding end part 11. For example, the first conductive connecting member 2 may include one second part 22. Thus, the second part 22 may be disposed on the corresponding first surface 112.

With the above configuration, during the process of manufacturing the busbar 100, the oxide layer on the surface of the body 1 can be removed, and then the first conductive connecting member 2 is connected to the body 1. During subsequent use, the body 1 and the first conductive connecting member 2 can maintain a good contact state, and no loosening will occur at their contact position, thereby reducing the occurrence of oxide layer and helping to maintain good electrical conductivity.

Hereinafter, the principle of the present disclosure will be illustratively described mainly by taking the first conductive connecting member 2 disposed on the end face 111 and the pair of first surfaces 112 of the corresponding end part 11 around the corresponding end part 11, as an example; while the other aforementioned cases are similar, and the present disclosure will not elaborate on them herein.

Referring to FIGS. 1 to 3, in some embodiments, each first conductive connecting member 2 may be welded to the corresponding end part 11 of the body 1. A plurality of first solder joints 23 may be formed between each first conductive connecting member 2 and the corresponding end part 11, so that each first conductive connecting member 2 is connected to the corresponding end part 11 through the plurality of first solder joints 23. The plurality of first solder joints 23 are arranged in an array, and the shape of the first solder joint 23 is not limited. Therefore, looseness of the busbar caused by factors such as vibration and temperature changes during use can be reduced, thereby reducing the occurrence of oxidation at the connection position between the first conductive connecting member 2 and the body 1, and helping to maintain good electrical conductivity. For example, the plurality of first solder joints 23 are arranged in a dot pattern, which can provide a stable mechanical and electrical connection, while dissipating stresses and avoiding fatigue or failure issues that may arise from a single connection point.

It should be understood that, in other embodiments, each first conductive connecting member 2 can be connected to the corresponding end part 11 through a strip-like solder seam, for example, achieved through seam welding or dense zero-pitch spot welding. With this arrangement, the strip-like solder seam can provide not only a large-area contact region, but also enhance mechanical strength and electrical conductivity.

For example, an ultrasonic welding technology may be used to realize the connection between the first conductive connecting member 2 and the body 1. The energy generated by high-frequency vibration causes the material to be locally heated to a molten state and then be rapidly cooled and solidified under the action of pressure, thereby forming the plurality of first solder joints 23 which are robust and have good electrical conductivity. In addition, by adopting the ultrasonic welding technology, the problem that the copper plate is difficult to be welded onto the aluminum plate can be solved, and the welding quality between the aluminum plate and the copper plate is improved. In addition, the aluminum conductor tends to form an aluminum oxide film on its surface in a natural environment, through adopting the ultrasonic welding technology, the oxide film at the first solder joints 23 can be removed during the welding process, and good electrical connection is formed, thereby reducing the influence of the oxide layer on the electrical connection performance.

With continued reference to FIG. 1 to FIG. 3, in some embodiments, a ratio of a coverage area of the plurality of first solder joints 23 to a surface area of the corresponding first conductive connecting member 2 may be greater than or equal to a predetermined value. For example, the ratio is greater than or equal to 10%. It can be understood that when the coverage area of the plurality of first solder joints 23 is increased, a larger surface area of the first conductive connecting member can participate in the current transmission process, thereby reducing the resistance. In addition, the stability of the electrical connection between the first conductive connecting member 2 and the body 1 can be improved.

It should be noted that the numbers, values, quantities, etc., which may be mentioned above and elsewhere in the present disclosure, are illustrative and are not intended to limit the scope of the present disclosure in any way. Any other appropriate numbers, values, and quantities are possible. For example, according to specific application scenarios and requirements, the ratio of the coverage area of the plurality of first solder joints 23 to the surface area of the corresponding first conductive connecting member 2 may be 25%.

In some embodiments, the hardness of the first conductive connecting member 2 may be similar to that of the aluminum plate. For example, a Vickers hardness of the first conductive connecting member 2 may be in a range of 50 - 60. Therefore, the problem of poor welding or cold solder joints caused by the reduction in bonding force during the welding process can be solved.

FIG. 4 shows a schematic structural diagram of the second conductive connecting member 3 according to some embodiments of the present disclosure. As shown in FIGS. 1, 2 and 4, in some embodiments, the body 1 further includes a middle part 12 located between the pair of end parts 11. The at least one second conductive connecting member 3 may be disposed on a side or two sides of the middle part 12 along the length direction Z of the body 1, to meet the connection between the body 1 and other electrical component. In addition, during use, the current flows from the body 1 to other electrical component via the second conductive connecting member 3. Since the other electrical component is not in direct contact with the body 1, the contact resistance at the electrical connection is reduced, helping to reduce the electrical energy loss and lower the temperature of the system, thereby improving the stability of the electrical system.

Further, in the example shown in FIGS. 1 and 2, the at least one second conductive connecting member 3 may include a pair of second conductive connecting members 3. One of the pair of second conductive connecting members 3 is disposed on a side of the middle part 12, and the other one of the pair of second conductive connecting members 3 is disposed on the other side of the middle part 12. Certainly, in other examples, the at least one second conductive connecting member 3 may include one second conductive connecting member 3, and the second conductive connecting member 3 is disposed on a side of the middle part 12. The embodiments of the present disclosure are not limited thereto.

Referring to FIGS. 1, 2 and 4, in some embodiments, the middle part 12 may include a pair of second surfaces 121 and a pair of first side surfaces 122. The pair of second surfaces 121 are disposed opposite to each other along the thickness direction X of the body 1, so that the pair of first side surfaces 122 are disposed opposite to each other along the width direction Y of the body 1. Correspondingly, the second conductive connecting member 3 may include a third part 31 and a pair of fourth parts 32 connected to the third part 31, and the pair of fourth parts 32 are disposed on a same side of the third part 31. Thus, the third part 31 of the second conductive connecting member 3 may be disposed on a corresponding first side surface 122 of the middle part 12, and the pair of fourth parts 32 of the second conductive connecting member 3 may be disposed on the pair of second surfaces 121 of the middle part 12.

With the above configuration, during the process of manufacturing the busbar 100, the oxide layer on the surface of the body 1 can be removed, and then the second conductive connecting member 3 is connected to the body 1. During subsequent use, the body 1 and the second conductive connecting member 3 can maintain a good contact state, and no loosening will occur at their contact position, thereby reducing the occurrence of oxide layer and helping to maintain good electrical conductivity.

Referring to FIGS. 1, 2, and 4, in some embodiments, the second conductive connecting member 3 may be welded to the middle part 12, and a plurality of second solder joints 33 may be formed between the second conductive connecting member 3 and the middle part 12, so that the second conductive connecting member 3 is connected to the middle part 12 through the plurality of second solder joints 33. By welding the second conductive connecting member 3 and the body 1 together, looseness caused by factors such as vibration and temperature changes during use can be avoided, thereby reducing the occurrence of oxidation at the connection position between the second conductive connecting member 3 and the body 1, and helping to maintain good electrical conductivity.

For example, the ultrasonic welding technology may also be used to realize the connection between the second conductive connecting member 3 and the body 1. Similarly, the energy generated by high-frequency vibration causes the material to be locally heated to a molten state and then be rapidly cooled and solidified under the action of pressure, thereby forming the plurality of second solder joints 33 which are robust and have good electrical conductivity. In addition, by adopting the ultrasonic welding technology, the problem that the copper plate is difficult to be welded onto the aluminum plate can be solved, and the welding quality between the aluminum plate and the copper plate is improved.

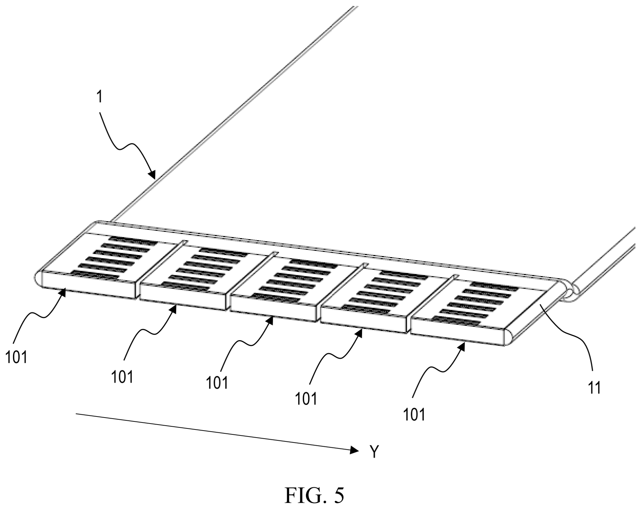

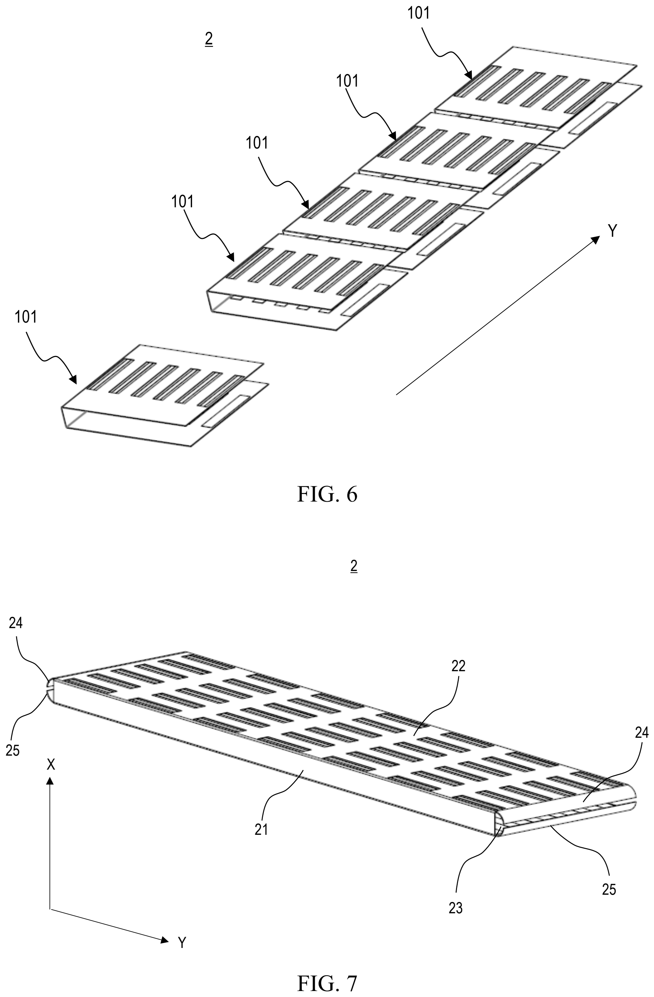

FIG. 5 shows a schematic structural diagram of a portion of a body 1 and a first conductive connecting member 2 according to some other embodiments of the present disclosure. FIG. 6 shows an exploded view of the first conductive connecting member 2 shown in FIG. 5. The first conductive connecting member 2 shown in FIGS. 5 and 6 has a similar structure to the first conductive connecting member 2 shown in FIG. 3. In addition, the body 1 shown in FIG. 5 has the similar structure as the body 1 shown in FIG. 2. Hereinafter, the difference between the two will be mainly described, while the same parts will not be repeated.

Referring to FIGS. 5 to 6, in some embodiments, in order to improve the welding quality between each first conductive connecting member 2 and the body 1, the first conductive connecting members 2 may be divided into a plurality of connecting units 101 along the width direction Y of the body 1. Adjacent connecting units 10 of the plurality of connecting units 101 may be spaced apart from each other to avoid mutual influence. Therefore, the plurality of connecting units 101 can each be welded to the body 1, so as to avoid the problem of poor welding or cold solder joints caused by vibration and the like when the entire first conductive connecting member 2 is welded to the body 1. It should be understood that, in other embodiments, the first conductive connecting member 2 may be welded to the body 1 through any other appropriate structure, so as to improve the welding quality between the first conductive connecting member 2 and the body 1.

FIG. 7 shows a schematic structural diagram of a first conductive connecting member 2 according to some other embodiments of the present disclosure. The first conductive connecting member 2 shown in FIG. 7 has a similar structure as the first conductive connecting member 2 shown in FIG. 3. Hereinafter, the difference between the two will be mainly described, while the same parts will not be repeated.

Referring to FIGS. 2 and 7, when an electrical connector or other electrical component is assembled with the busbar along, for example, the width direction Y of the body 1, edges of the pair of second parts 22 may curl up and form curled edges. In some embodiments, to avoid the pair of second parts 22 from curling up, each end part 11 of the pair of end parts 11 may include a pair of second side surfaces 113 disposed opposite to each other along the width direction Y of the body 1. The pair of second side surfaces 113 are located between the pair of first surfaces 112 and connected to the end face 111. The first conductive connecting member 2 may further include a pair of fifth parts 24 and a pair of sixth parts 25. The pair of fifth parts 24 are disposed opposite to each other along the width direction Y of the body 1, and the pair of sixth parts 25 are disposed opposite to each other along the width direction Y of the body 1. The pair of fifth parts 24 may be connected to one of the pair of second parts 22 of the corresponding first conductive connecting member 2, and the pair of fifth parts 24 may be disposed on the pair of second side surfaces 113 of the corresponding end parts 11. The pair of sixth parts 25 may be connected to the other one of the pair of second parts 22 of the corresponding first conductive connecting member 2, and the pair of sixth parts 25 may be disposed on the pair of second side surfaces 113 of the corresponding end part 11.

With the above configuration, when the electrical connector or other electrical component is assembled with the busbar along, for example, the width direction Y of the body 1, due to the additional fixing effect provided by the pair of fifth parts 24 and the pair of sixth parts 25, the edges of the second parts 22 are effectively prevented from curling up. It should be understood that, in other embodiments, the first conductive connecting member 2 may adopt any other appropriate structure to prevent the pair of second parts 22 from curling up.

Referring to FIGS. 2 and 7, in some embodiments, to facilitate the assembly of the first conductive connecting member 2 and the corresponding end part 11, the pair of fifth parts 24 may be spaced apart from the pair of sixth parts 25 of the corresponding first conductive connecting member 2 along the thickness direction X of the body 1 to jointly wrap around the pair of second side surfaces 113 of the corresponding end part 11. Thus, a gap may be provided between the pair of fifth parts 24 and the pair of sixth parts 25 of the corresponding conductive connecting member 2, thereby facilitating the assembly of the first conductive connecting member 2 and the body 1. It should be understood that, in other embodiments, the first conductive connecting member 2 may adopt any other appropriate structure to facilitate the assembly of the first conductive connecting member 2 and the body 1.

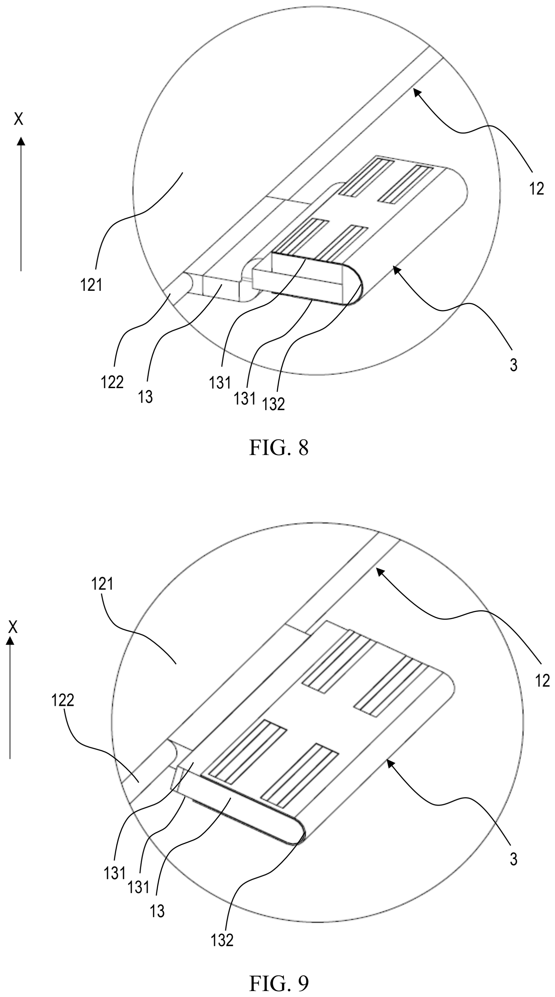

FIGS. 8 and 9 show schematic structural diagrams of a portion of a second conductive connecting member 3 and a body 1 according to some other embodiments of the present disclosure. The second conductive connecting member 3 and the body 1 shown in FIGS. 8 and 9 have similar structures to the second conductive connecting member 3 and the body 1 shown in FIGS. 1, 2 and 4. Hereinafter, the difference between the two will be mainly described, while the same parts will not be repeated.

Referring to FIGS. 8 and 9, in some embodiments, the body 1 may further include at least one extending part 13 connected to the middle part 12. Specifically, the extending part 13 may be disposed on a first side surface 122 of the middle part 12 and extend away from the middle part 12. The extending part 13 may include a pair of third surfaces 131 disposed opposite to each other along the thickness direction X of the body and a third side surface 132 disposed between the pair of third surfaces 131. The second conductive connecting member 3 may surround the third side surface 132 and the pair of third surfaces 131 of the corresponding extending part 13.

It should be noted that the shape of the extending part 13 is not limited herein. For example, in the example shown in FIG. 8, the extending part 13 may be arranged in a bent shape. In the example shown in FIG. 9, the extending part 13 may be arranged straight.

With the above configuration, during the process of manufacturing the busbar 100, the oxide layer on the surface of the body 1 can be removed, and then the second conductive connecting member 3 is connected to the body 1. During subsequent use, the body 1 and the second conductive connecting member 3 can maintain a good contact state, and no loosening will occur at their contact position, thereby reducing the occurrence of oxide layer and helping to maintain good electrical conductivity.

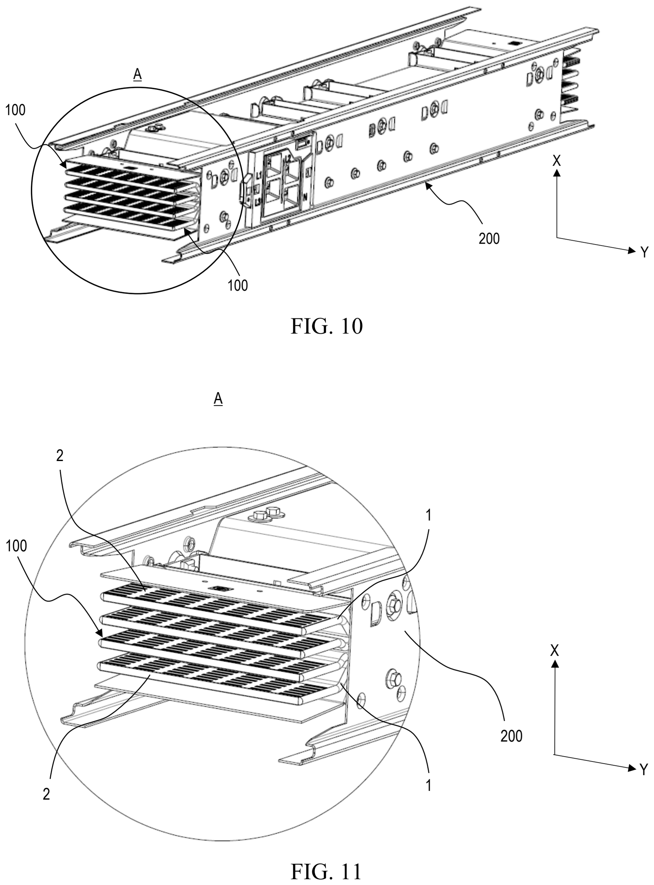

FIG. 10 shows a schematic structural diagram of a busbar assembly according to some embodiments of the present disclosure. FIG. 11 shows an enlarged view of a portion A of the busbar assembly shown in FIG. 10. As shown in FIG. 10 and FIG. 11, embodiments of the present disclosure further provide a busbar assembly, the busbar assembly includes a housing 200 and a plurality of busbars 100, and each busbar 100 is any busbar 100 as described herein. The plurality of busbars 100 may be spaced apart along the thickness direction X of the body 1. The pair of end parts 11 of each busbar 100 at least partially extend out of the housing 200 to facilitate the assembly with electrical connector and other electrical component.

The structural design according to embodiments of the present disclosure may be applied to various busbars to at least partially solve the above problems. It should be understood that the structural design according to embodiments of the present disclosure may also be applied to other electrical components, which is not limited in embodiments of the present disclosure.

Various embodiments of the present disclosure have been described above, which are illustrative, not exhaustive, and are not limited to embodiments disclosed. Many modifications and variations will be apparent to those of ordinary skill in the art without departing from the scope and the illustrated embodiments. The selection of the terms used herein is intended to explain the principles of embodiments, practical applications, or technical improvements in the marketplace, or to enable others of ordinary skill in the art to understand embodiments disclosed herein.

## Claims

1. A busbar (100), the busbar (100) comprising:
a body (1) comprising a pair of end parts (11) disposed opposite to each other along a length direction (Z) thereof, each end part (11) of the pair of end parts (11) comprising a pair of first surfaces (112) disposed opposite to each other along a thickness direction (X) of the body (1); and
at least one first conductive connecting member (2) disposed on at least one first surface (112) of the pair of first surfaces (112) of a corresponding end part (11) of the body (1).

2. The busbar (100) of claim 1, wherein each end part of the pair of end parts (11) comprises an end face (111) disposed at an end of the body (1) along the length direction (Z), the end face (111) is located between the pair of first surfaces (112), and the first conductive connecting member (2) is disposed on the end face (111) and the pair of first surfaces (112) of the corresponding end part (11) around the corresponding end part (11).

3. The busbar (100) of claim 2, wherein the first conductive connecting member (2) comprises a first part (21) and a pair of second parts (22) disposed on the same side of the first part (21), the first part (21) is disposed on the end face (111) of the corresponding end part (11), and each second part (22) of the pair of second parts (22) is disposed on a corresponding first surface (112).

4. The busbar (100) of any of claims 1 to 3, wherein the first conductive connecting member (2) is welded to the corresponding end part (11) of the body (1), and the first conductive connecting member (2) is connected to the corresponding end part (11) through a plurality of first solder joints (23) or a strip-like solder seam.

5. The busbar (100) of any of claims 1 to 4, wherein the first conductive connecting member (2) is divided into a plurality of connecting units (101) along a width direction (Y) of the body (1), and adjacent connecting units (101) of the plurality of connecting units (101) are spaced apart from each other.

6. The busbar (100) of any of claims 1 to 5, wherein the busbar (100) comprises at least one second conductive connecting member (3), the body (1) comprises a middle part (12) located between the pair of end parts (11), and the at least one second conductive connecting member (3) is disposed on a side or two sides of the middle part (12) along the length direction (Z) of the body (1).

7. The busbar (100) of claim 6, wherein the middle part (12) comprises a pair of second surfaces (121) disposed opposite to each other along the thickness direction (X) of the body (1) and a pair of first side surfaces (122) disposed opposite to each other along a width direction (Y) of the body (1), the second conductive connecting member (3) comprises a third part (31) and a pair of fourth parts (32) connected to the third part (31), the third part (31) of the second conductive connecting member (3) is disposed on a corresponding first side surface (122) of the middle part (12), and the pair of fourth parts (32) of the second conductive connecting member (3) are disposed on the pair of second surfaces (121) of the middle part (12).

8. The busbar (100) of any of claims 1 to 7, wherein each end part (11) of the pair of end parts (11) comprises a pair of second side surfaces (113) disposed opposite to each other along a width direction (Y) of the body (1),
the first conductive connecting member (2) comprises a pair of fifth parts (24) disposed opposite to each other along the width direction (Y) of the body (1) and a pair of sixth parts (25) disposed opposite to each other along the width direction (Y) of the body (1),
the pair of fifth parts (24) are connected to one of the pair of second parts (22) of a corresponding first conductive connecting member (2) and disposed on the pair of second side surfaces (113) of the corresponding end part (11), and
the pair of sixth parts (25) are connected to the other one of the pair of second parts (22) of the corresponding first conductive connecting member (2) and disposed on the pair of second side surfaces (113) of the corresponding end part (11).

9. The busbar (100) of claim 8, wherein the pair of fifth parts (24) are spaced apart from the pair of sixth parts (25) of the corresponding first conductive connecting member (2) along the thickness direction (X) of the body (1) to jointly wrap around the pair of second side surfaces (113) of the corresponding end part (11).

10. A busbar assembly, the busbar assembly comprising:
a housing (200); and
a plurality of busbars (100), each busbar (100) being the busbar (100) of any of claims 1 to 9, the plurality of bus bars (100) being spaced apart along a thickness direction (X) of the body (1), and the pair of end parts (11) of each busbar (100) at least partially extending out of the housing (200).
